# EUROPEAN PATENT APPLICATION

(11) **EP 1 248 478 A1**
(43) Date of publication of application: **09.10.2002**
(21) Application number: 01270070.4
(22) Date of filing: 06.12.2001
(51) Int. Cl.: H04Q 7/36

(54) **BASE STATION APPARATUS AND RADIO COMMUNICATION CHANNEL ALLOTTING METHOD**

(30) Priority: 07.12.2000 JP 2000372280
(71) Applicant: MATSUSHITA ELECTRIC INDUSTRIAL CO., LTD., Kadoma-shi, Osaka 571-8501 (JP)
(72) Inventor: SHOJI, Takahiro, Yokohama-shi, Kanagawa 221-0005 (JP); HIRAMATSU, Katsuhiko, Yokosuka-shi, Kanagawa 238-0031 (JP)
(74) Representative: Grünecker, Kinkeldey, Stockmair & Schwanhäusser Anwaltssozietät
(86) International application number: JP0110676
(87) International publication number: WO02047413

(57) **Abstract**

Session monitoring section 104 notifies threshold control section 106 of the session time and interference time together with information that a call has been terminated and notifies threshold control section 106 of information that a forced disconnection has occurred. Channel assignment section 105 notifies threshold control section 106 of information that a call loss has occurred. Threshold control section 106 adaptively changes a decision threshold according to an interference rate, occurrence of a forced disconnection or occurrence of a call loss. Channel assignment section 105 then assigns channels based on a result of a comparison between the decision threshold controlled by threshold control section 106 and the CIR value of the uplink.

## Description

### Technical Field

The present invention relates to a base station apparatus and radio communication channel (hereinafter simply referred to as "channel") assignment method.

### Background Art

As described in "Mobile Communication" (Shuichi Sasaoka, Ohmsha, Ltd., pp.127-158 (1998)), methods for assigning channels in a mobile communication system using a cellular system are broadly divided into a fixed channel assignment method whereby channels used by cells are determined beforehand and a dynamic channel assignment method whereby channel assignment is changed with time according to call requests.

The fixed channel assignment method allows simple control, etc. because channels used by cells are predetermined, but this method cannot flexibly handle variations in traffic intensity in each cell.

In contrast, the dynamic channel assignment method requires complicated control, etc. but since channels are assigned according to call requests it is possible to realize efficient channel assignment according to variations in traffic intensity. Especially, in line with increasing demands for mobile communications in recent years, an efficient dynamic channel assignment method is required to utilize limited frequency resources efficiently.

An example of efficient dynamic channel assignment methods is the one described in "Autonomous Reuse Partitioning (ARP) in Micro-cellular Systems" (Toshihito Kanai, TECHNICAL REPORT OF IEICE (RCS91-32, 1991)). According to this ARP (Autonomous Reuse Partitioning) method, channels are selected based on a priority order identical in all cells, and of the selected channels, channels are used one by one starting with a channel whose CIR (signal to interference ratio) exceeds a predetermined threshold. More specifically, channel assignment according to the ARP method is carried out as follows. In the following explanations, a communication channel directed from a mobile station to a base station is referred to as "uplink", and on the contrary, a communication channel directed from a base station to a mobile station is referred to as "downlink".
1. The level of an uplink desired signal and the level of a downlink desired signal are measured.
2. A free channel with the highest priority is selected according to a priority order common to all base stations.
3. With regard to the selected channel, the interference signal level in uplink is measured on the base station side and the interference signal level in downlink is measured on the mobile station side.
4. If the CIRs of the uplink and downlink of the selected channel are equal to or higher than a predetermined threshold, the selected channel is assigned. If the CIR of either the uplink or downlink of the selected channel is lower than the predetermined threshold, a free channel with the next highest priority order is selected and steps 3 and 4 are repeated until all channels are terminated.

Thus, by assigning channels according to the ARP method, it is possible to realize so-called reuse partitioning (Halpern: "Reuse Partitioning in Cellular Systems", Proc. of VTC'83, pp.322-327 (1983)) which makes it possible to set an optimal number of cell iterations (cell refuse factor) for every channel based on the distance between the mobile station and the base station, that is, the magnitude of propagation path loss in an autonomous decentralized manner in each cell. When reuse partitioning is realized and an optimal cell reuse factor is set, it is possible for the entire system to accommodate a larger number of calls.

In the channel assignment method based on the above-described ARP method here, it is known that there is a tendency that as the predetermined threshold of CIR increases, more call losses occur and as the predetermined threshold of CIR decreases, an interference rate increases and more forced disconnections occur. That is, when the predetermined threshold of CIR is optimal, the highest frequency utilization efficiency is realized and the system capacity also reaches a maximum.

However, since a communication situation changes from moment to moment, it is very difficult to predict and preset an optimal threshold actually corresponding to a maximum system capacity through simulations, etc.

### Disclosure of Invention

It is an object of the present invention to provide a base station apparatus and a radio communication channel assignment method capable of determining an optimal threshold (hereinafter referred to as "decision threshold") used to decide whether or not to assign a channel using a dynamic channel assignment method and to maximize the system capacity.

To attain this object, the present invention controls assignment of radio communication channels according to a current communication situation to maximize the system capacity. More specifically, the present invention makes it possible to maximize the system capacity by adaptively changing a decision threshold according to a current communication situation.

### Brief Description of Drawings

FIG.1 is a block diagram showing a configuration of a base station according to Embodiment 1 of the present invention;
FIG.2 is a flow chart to illustrate an operation of a threshold control section when the base station according to Embodiment 1 of the present invention assigns a channel based on a CIR;
FIG.3 is a flow chart to illustrate an operation of the threshold control section when the base station according to Embodiment 1 of the present invention assigns a channel based on interference power;
FIG.4 is a flow chart to illustrate an operation of a threshold control section when a base station according to Embodiment 2 of the present invention assigns a channel based on a CIR; and
FIG.5 is a flow chart to illustrate an operation of a threshold control section when a base station according to Embodiment 3 of the present invention assigns a channel based on a CIR.

### Best Mode for Carrying out the Invention

With reference now to the attached drawings, embodiments of the present invention will be explained below.

### (Embodiment 1)

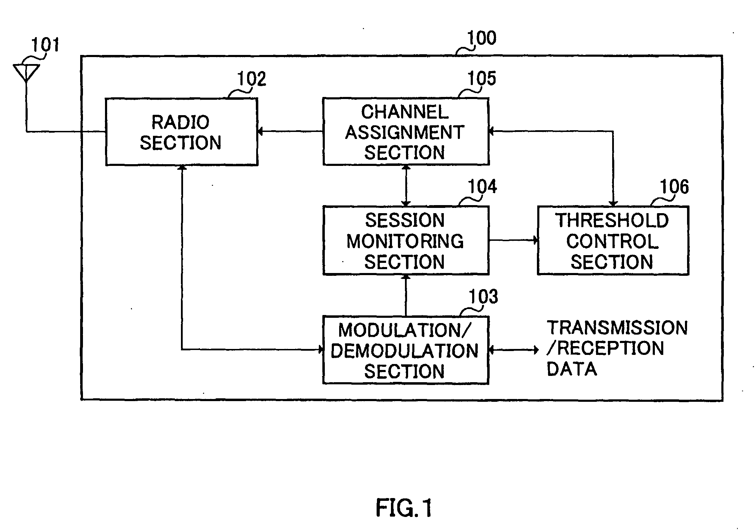

FIG.1 is a block diagram showing a configuration of a base station according to Embodiment 1 of the present invention. Base station 100 communicates by radio with mobile stations within its own cell through channels assigned to the respective mobile stations.

Radio section 102 of base station 100 down-converts the frequency of a signal received from a mobile station in communication via antenna 101 and outputs the signal to modulation/demodulation section 103. Furthermore, radio section 102 up-converts the frequency of a transmission signal modulated by modulation/demodulation section 103 and transmits the signal from antenna 101. At the time of transmission/reception, radio section 102 receives a signal from the mobile station and transmits a signal to the mobile station using a channel assigned by channel assignment section 105.

Modulation/demodulation section 103 carries out predetermined demodulation processing on the signal output from radio section 102 and outputs the signal to session monitoring section 104. Received data is obtained through this demodulation processing. Furthermore, modulation/demodulation section 103 carries out predetermined modulation processing on the transmission data and outputs the data to radio section 102.

Session monitoring section 104 calculates an interference rate and instructs a forced disconnection while observing the signal output from demodulation section 103.

That is, session monitoring section 104 measures a session time and interference time of a call in communication. Then, when the termination of the call is notified from channel assignment section 105, session monitoring section 104 notifies threshold control section 106 of the session time and interference time together with information that the call has been terminated. The "session time" refers to a time period from establishment of a call to termination of the call and the "interference time" refers to a time period during which a received signal is subject to interference in a session. "Being subject to interference" refers to a CIR of the received signal falling below a desired value.

Furthermore, when a call in communication is continuously subject to interference for a predetermined time period, session monitoring section 104 instructs channel assignment section 105 to forcibly disconnect the call. At this time, session monitoring section 104 notifies threshold control section 106 of the information that a forced disconnection has occurred. Upon receipt of the instruction of the forced disconnection, channel assignment section 105 executes a forced disconnection on the call in communication and terminates the call.

Channel assignment section 105 assigns channels based on a result of a comparison between a decision threshold controlled by threshold control section 106 and a CIR value of the uplink. The specific method for channel assignment will be explained later. When a call loss occurs, channel assignment section 105 notifies threshold control section 106 of occurrence of the call loss.

Threshold control section 106 adaptively changes a decision threshold according to a current communication situation. That is, threshold control section 106 adaptively changes the decision threshold according to an interference rate, occurrence of a forced disconnection or occurrence of a call loss.

The reason why an interference rate, occurrence of a forced disconnection and occurrence of a call loss are used as information indicating the current communication situation is that such information is generally used as a measure to evaluate the system capacity. By the way, the information indicating the current communication situation is not limited to the above-described three items of information, but any information can be used as the information indicating the current communication situation if the information can be used as a measure to evaluate the system capacity.

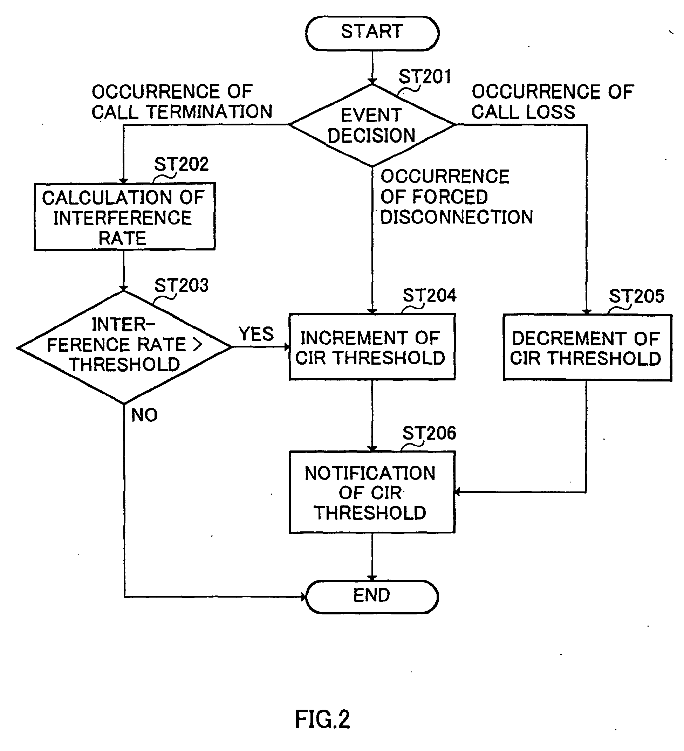

Then, an operation of threshold control section 106 will be explained. FIG.2 is a flow chart to illustrate an operation of a threshold control section when the base station according to Embodiment 1 of the present invention assigns channels based on a CIR.

Threshold control section 106 starts to operate when it is notified of occurrence of a call termination or occurrence of a forced disconnection from session monitoring section 104 or notified of occurrence of a call loss from channel assignment section 105.

First, in step (hereinafter abbreviated as "ST") 201, threshold control section 106 decides an event that has occurred. That is, threshold control section 106 decides which event has occurred; a call termination, forced disconnection or call loss.

In ST201, when threshold control section 106 decides that a call termination has occurred, threshold control section 106 calculates an interference rate from the interference time and session time notified from session monitoring section 104 in ST202. More specifically, threshold control section 106 calculates the interference rate by dividing the interference time by the session time.

Then, in ST203, threshold control section 106 compares the interference rate calculated in ST202 with a predetermined threshold. If the interference rate is higher than the predetermined threshold, in other words, when the CIR which is the decision threshold is too low considering the current communication situation, threshold control section 106 increments the CIR threshold by a predetermined amount in ST204. For example, threshold control section 106 increments the CIR threshold by 0.1 dB. On the other hand, when the interference rate is lower than the predetermined threshold in ST203, the current CIR threshold is maintained.

Furthermore, in ST201, when threshold control section 106 decides that a forced disconnection has occurred, in other words, when the CIR threshold is too low considering the current communication situation, threshold control section 106 increments the CIR threshold by a predetermined amount likewise in ST204.

The CIR threshold incremented in ST204 is notified from threshold control section 106 to channel assignment section 105 in ST206. This reduces the interference rate of the call to which a channel is assigned and thereby reduces the occurrence frequency of forced disconnections.

Furthermore, when threshold control section 106 decides in ST201 that a call loss has occurred, in other words, when the CIR is too high considering the current communication situation, threshold control section 106 decrements the CIR threshold by a predetermined amount in ST205. For example, threshold control section 106 decrements the CIR threshold by 0.1 dB. The CIR threshold decremented in ST205 is notified from threshold control section 106 to channel assignment section 105 in ST206. This reduces the occurrence frequency of a call loss.

Then, a channel assignment method performed by channel assignment section 105 using the CIR value of the received signal will be explained. Channel assignment section 105 assigns channels to the mobile stations using the CIR threshold controlled by threshold control section 106 as follows.

That is:
1. A free channel with the highest priority is selected according to a priority order common to all base stations.
2. The CIR value of the uplink of the selected channel is compared with the CIR threshold controlled by threshold control section 106.
3. If the CIR value of the uplink is higher than the CIR threshold, the selected channel is assigned. On the other hand, if the CIR value of the uplink is lower than the CIR threshold, a free channel with the next highest priority is selected and steps 2 and 3 are repeated until all channels are terminated.
4. If it is decided that assignment is impossible as to all channels, this case is regarded as a call loss.

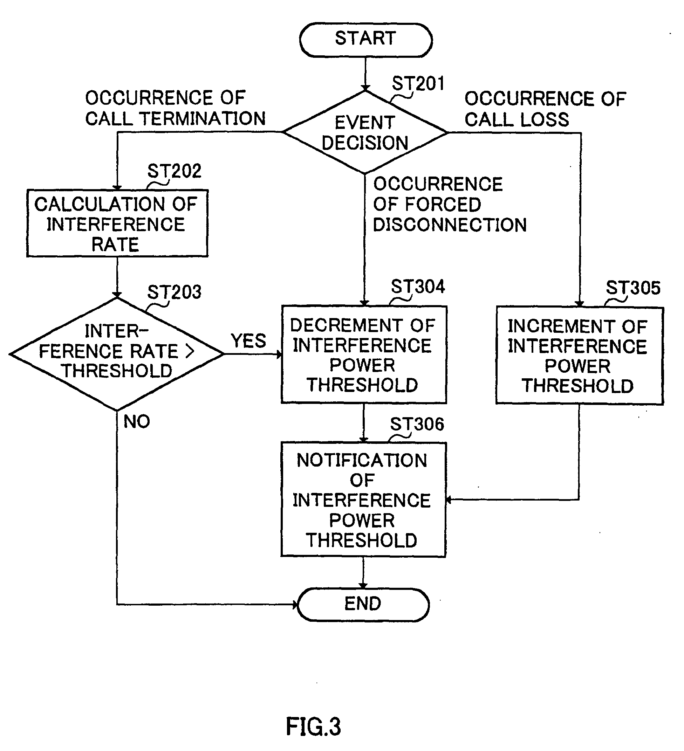

In the above-described explanation, the case where channel assignment is carried out based on the CIR value of a received signal has been described. However, it is also possible to carry out channel assignment based on an interference power value of the received signal. Operations of threshold control section 106 and channel assignment section 105 in this case are as follows. FIG.3 is a flow chart to illustrate an operation of the threshold control section when the base station according to Embodiment 1 of the present invention assigns a channel based on interference power. The steps corresponding to the same operations as those shown in FIG.2 will be given the same reference numerals without further explanations thereof.

When the interference rate is higher than a predetermined threshold in ST203 or it is decided in ST201 that a forced disconnection has occurred, threshold control section 106 decrements the interference power threshold which is a decision threshold by a predetermined amount in ST304. The interference power threshold decremented in ST304 is notified from threshold control section 106 to channel assignment section 105 in ST306. This reduces the interference rate of call to which a channel is assigned and reduces the occurrence frequency of a forced disconnection.

When it is decided in ST201 that a call loss has occurred, threshold control section 106 increments the interference power threshold by a predetermined amount in ST305. The interference power threshold incremented in ST305 is notified from threshold control section 106 to channel assignment section 105 in ST306. This reduces the occurrence frequency of a call loss.

Then, a channel assignment method performed by channel assignment section 105 using the interference power value of the received signal will be explained. Channel assignment section 105 assigns a channel to each mobile station using the interference power threshold controlled by threshold control section 106 as follows.

That is:
1. A free channel with the highest priority is selected according to a priority order common to all base stations.
2. The interference power value of the uplink of the selected channel is compared with the interference power threshold controlled by threshold control section 106.
3. When the interference power value of the uplink is lower than the interference power threshold, the selected channel is assigned. On the other hand, when the interference power value of the uplink is higher than the interference power threshold, a free channel with the next highest priority is selected and steps 2 and 3 are repeated until all channels are terminated.
4. If it is decided that assignment is impossible for all channels, this case is regarded as a call loss.

Thus, this embodiment controls radio communication channel assignment according to a current communication situation, and can thereby assign optimal channels according to the current communication situation and maximize the system capacity. That is, this embodiment adaptively changes a decision threshold according to the current communication situation, and can thereby always assign channels based on an optimal decision threshold and maximize the system capacity.

### (Embodiment 2)

When there is a mobile station that transmits a signal with a large transmission power in its own cell or a nearby cell, etc., other mobile stations are subject to severe interference. In this case, the interference rate increases and the occurrence frequency of a forced disconnection increases, and therefore the CIR threshold increases consecutively under the threshold control shown in Embodiment 1 above. As a result, the CIR threshold reaches a very high value, which makes it impossible to accommodate any calls for which communication requests have been sent, reducing the system capacity instead.

Furthermore, when many calls occur drastically, the occurrence frequency of a call loss increases, and therefore the CIR threshold reduces consecutively under the threshold control shown in Embodiment 1 above. As a result, the CIR threshold falls drastically, which causes calls for which communication requests have been sent to be accommodated one after another, increasing interference among mobile stations. As a result, it is no longer possible for individual calls to maintain desired communication quality, reducing the system capacity instead.

Thus, this embodiment provides an upper limit and lower limit to a decision threshold and changes the decision threshold between the upper limit and lower limit and in this way handles cases where the above-described abnormal communication situations occur consecutively.

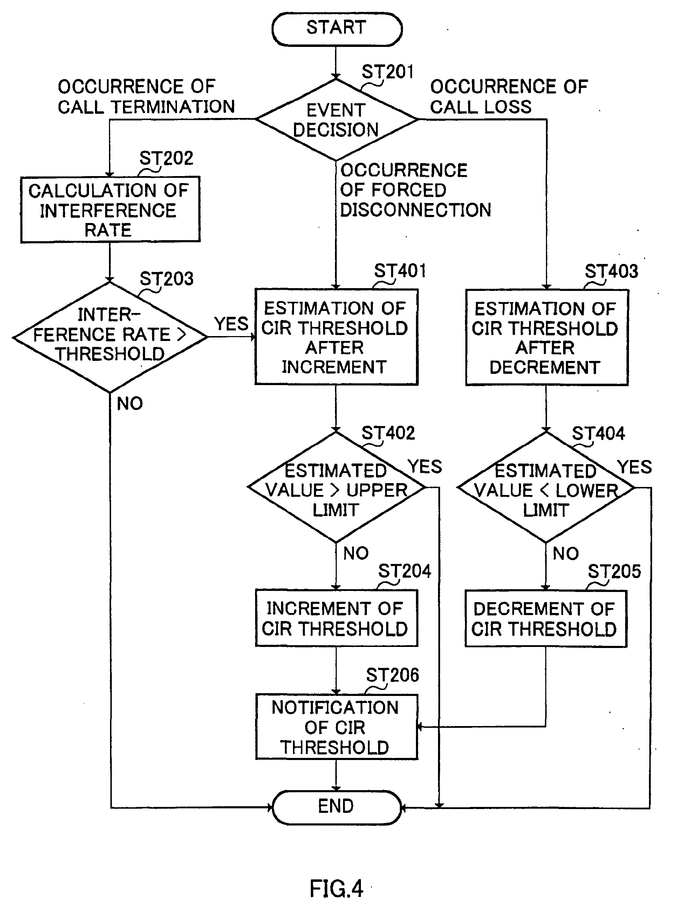

FIG.4 is a flow chart to illustrate an operation of a threshold control section when a base station according to Embodiment 2 of the present invention assigns a channel based on a CIR. The steps corresponding to the same operations as those shown in FIG.2 will be given the same reference numerals without further explanations thereof.

When an interference rate is higher than a threshold in ST203 or it is decided in ST201 that a forced disconnection has occurred, threshold control section 106 estimates a CIR threshold after an increment in ST401 and compares the estimated value with an upper limit of the CIR threshold in ST402.

Then, when the estimated value is higher than the upper limit in ST402, threshold control section 106 does not increment the CIR threshold. That is, the current CIR threshold is maintained. On the other hand, when the estimated value is equal to or lower than the upper limit in ST402, threshold control section 106 increments the CIR threshold by a predetermined value.

Furthermore, if it is decided in ST201 that a forced disconnection has occurred, threshold control section 106 estimates a CIR threshold after a decrement in ST403 and compares the estimated value with the lower limit of the CIR threshold in ST404.

If the estimated value is lower than the lower limit in ST404, threshold control section 106 does not decrement the CIR threshold. That is, the current CIR threshold is maintained. On the other hand, if the estimated value is equal to or higher than the lower limit in ST404, threshold control section 106 decrements the CIR threshold by a predetermined value.

By the way, also if channel assignment is performed based on an interference power value of a received signal, it is naturally possible to provide an upper limit and lower limit to the interference power threshold and change the interference power threshold between the upper limit and lower limit.

Thus, this embodiment provides an upper limit and lower limit to the decision threshold and changes the decision threshold in the range of the upper limit to the lower limit, and therefore even if the above-described abnormal communication situations occur continuously, this embodiment can prevent the system capacity from being reduced.

### (Embodiment 3)

Under situations where forced disconnections occur frequently due to a drastic reduction of channel quality caused by a drastic increase of traffic, etc., it is necessary to restrict channel assignment to calls for which communication requests have been sent to secure the communication quality of a call currently in communication.

Thus, in the case that forced disconnections occur frequently this embodiment increases a variation of the decision threshold temporarily and restricts further channel assignments for calls for which communication requests have been sent.

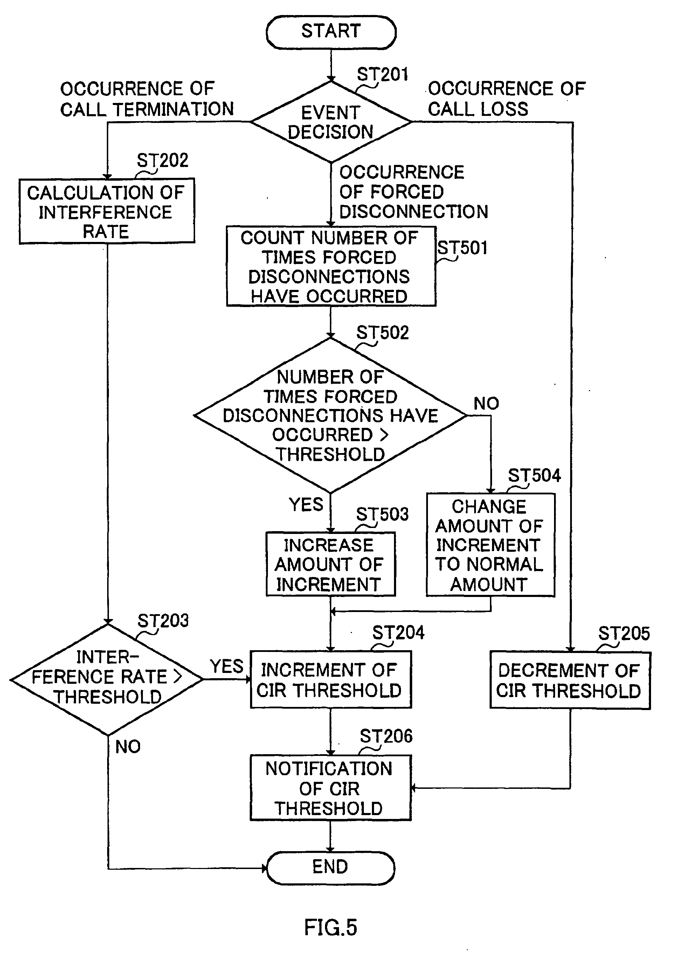

FIG.5 is a flow chart to illustrate an operation of a threshold control section when a base station according to Embodiment 3 of the present invention assigns a channel based on a CIR. The steps corresponding to the same operations as those shown in FIG.2 will be given the same reference numerals without further explanations thereof.

Threshold control section 106 counts the number of times the forced disconnection has occurred within a predetermined time period in ST501 and compares the number of times the forced disconnection has occurred with a threshold of the number of times the forced disconnection occurs in ST502.

Then, if the number of times the forced disconnection has occurred is greater than the predetermined threshold in ST502, threshold control section 106 increases the increasing amount of the CIR threshold by a predetermined amount. More specifically, threshold control section 106 sets the increasing amount twice a normal amount, for example.

On the other hand, if the number of times the forced disconnection has occurred is equal to or smaller than the predetermined threshold in ST502, threshold control section 106 changes the increasing amount of the CIR threshold to a normal amount.

By the processing in ST502 through ST504, the increasing amount of.the CIR threshold increases temporarily under situations where the forced disconnection occurs frequently.

In the case that channel assignment is carried out based on the interference power value of the received signal, it is also naturally possible to increase the decreasing amount of the interference power threshold temporarily under situations where the forced disconnection occurs frequently.

Thus, according to this embodiment, if the forced disconnection occurs frequently a variation of the decision threshold is increased temporarily and channel assignment to calls for which communication requests have been issued is restricted, and can thereby prevent drastic deterioration of the channel quality and prevent the communication quality of a call in communication from deteriorating.

In the above-described explanations, the case where the ARP method has been used as a channel assignment method has been described, but the present invention is not restricted to this and any method can be used if channel assignment by the method is performed based on a value indicating communication quality such as a signal to interference ratio, an interference power value, or the like.

Moreover, the present invention is not particularly restricted to a multiple access system used in the system. That is, the present invention is applicable to any multiple access system used in the system such as FDMA (Frequency Division Multiple Access), TDMA (Time Division Multiple Access) and CDMA (Code Division Multiple Access).

As described above, the present invention can maximize the system capacity by setting an optimal decision threshold used in a dynamic channel assignment method.

This application is based on the Japanese Patent Application No.2000-372280 filed on December 7, 2000, entire content of which is expressly incorporated by reference herein.

## Claims

1. A base station apparatus comprising:
a controller that maximizes the system capacity by controlling assignment of radio communication channels according to a current communication situation; and
a channel assignment device that assigns radio communication channels according to said control.

2. The base station apparatus according to claim 1, wherein the channel assignment device assigns radio communication channels based on a result of a comparison between a decision threshold and a value indicating the communication quality, and
the controller changes said decision threshold based on information indicating the current communication situation.

3. The base station apparatus according to claim 2, wherein the controller changes the decision threshold according to an interference rate of a received signal.

4. The base station apparatus according to claim 2, wherein the controller changes the decision threshold if a call loss occurs.

5. The base station apparatus according to claim 2, wherein the controller changes the decision threshold in the range of a preset upper limit to a preset lower limit.

6. The base station apparatus according to claim 2, wherein the value indicating the communication quality is a signal to interference ratio.

7. The base station apparatus according to claim 2, wherein the value indicating the communication quality is an interference power value.

8. The base station apparatus according to claim 2, wherein the controller changes the decision threshold if a forced disconnection occurs.

9. The base station apparatus according to claim 8, wherein the controller changes the variation of the decision threshold if the number of times a forced disconnection occurs exceeds a predetermined number of times within a predetermined time period.

10. A radio communication channel assignment method comprising:
a control step of maximizing the system capacity by controlling assignment of radio communication channels according to a current communication situation; and
a channel assignment step of assigning radio communication channels according to said control.

11. The radio communication channel assignment method according to claim 10, wherein in the channel assignment step, radio communication channels are assigned based on a result of a comparison between a decision threshold and a value indicating the communication quality, and
in the control step, said decision threshold is changed based on information indicating the current communication situation.
